Europäisches Patentamt
European Patent Office
Office européen des brevets

(11) Veröffentlichungsnummer: **0 344 681**
**A2**

# EUROPÄISCHE PATENTANMELDUNG

(21) Anmeldenummer: **89109646.3**

(22) Anmeldetag: **29.05.89**

(51) Int. Cl.4: **C09D 9/00**

(30) Priorität: **02.06.88 DE 3818770**

(43) Veröffentlichungstag der Anmeldung:
**06.12.89 Patentblatt 89/49**

(84) Benannte Vertragsstaaten:
**CH ES FR GB IT LI NL**

(71) Anmelder: **Weber, Karl-Arnold, Dr.**
**Saarstrasse 59**
**D-5090 Leverkusen 1(DE)**

(72) Erfinder: **Weber, Karl-Arnold, Dr.**
**Saarstrasse 59**
**D-5090 Leverkusen 1(DE)**

(54) **Verfahren zur Behandlung von Thermoplasten oder von nicht-thermoplastischen, amid- und/oder urethangruppenhaltigen Polymeren.**

(57) Verfahren zur Behandlung von Thermoplasten, die < 280 °C schmelzen, Duroplasten oder von anderen, amid- und/oder urethangruppenhaltigen Polymeren, dadurch gekennzeichnet, daß man sie mit Glycerin auf Temperaturen ≧ 120 °C erhitzt.

Das Verfahren dient insbesondere zur Abtrennung der genannten Thermoplaste oder Polymere von anderen Materialien, zum Zwecke der Reinigung, Aufarbeitung oder Abfallbeseitigung.

EP 0 344 681 A2

# Verfahren zur Behandlung von Thermoplasten oder von nicht-thermoplastischen, amid- und/oder urethangruppenhaltigen Polymeren

Die Erfindung betrifft ein Verfahren zur Behandlung von Thermoplasten, die unterhalb von 280 °C schmelzen, Duroplasten oder von anderen, amid- und/oder urethangruppehaltigen Polymeren.

Bei der Herstellung und Verarbeitung von Polymeren bleibt es nicht aus, daß die dazu erforderlichen Geräte und Maschinen, Lager- und Transportbehälter, Leitungen usw. mit den Ausgangsstoffen, Zwischenprodukten oder Fertigprodukten verschmutzt werden und deshalb gereinigt werden müssen. Es ist naheliegend, daß die Reinigung der oben genannten Gerätschaften und dergleichen vorzugsweise zerstörungsfrei erfolgen soll, damit die genannten Geräte wiederverwendbar bleiben und die Reinigung möglichst oft und ohne Beeinträchtigung der Produktions-oder Verwendungseigenschaften erfolgen kann. Außerdem ist auch der Gesichtspunkt von Bedeutung, daß die Rei nigungsmethode aus ökologischer und vor allem physiologischer Sicht völlig oder zumindest weitestgehend unbedenklich sein sollte.

Eine weitere Aufgabe ist darin zu sehen, anfallende Abfälle, z.B. Folienteile, Verschnitte, Fehlpartien, auf einfache Weise auf das Minimalvolumen zu komprimieren.

Eine weitere Aufgabe ist es, Abfälle oder Fehlpartien gegebenenfalls in der Weise aufzubereiten, daß sie biologisch abbaubar werden oder, daß sie leicht einer technischen Verwertung, z.B. einer Verbrennung zur Energiegewinnung, zugeführt werden können.

Eine weitere Aufgabe besteht darin, Polymere enthaltende Gemische, z.B. Polymergemische, Schichtstoffe oder Lackierungen, in die Ausgangspolymeren oder deren Vorstufen und/oder etwaige Zusatzstoffe, z.B. anorganische Farbpigmente, zu trennen.

Es ist bekannt, daß mit Polymeren verschmutzte Metallteile, wie z.B. Statikmischer vom Typ BKM, wie sie in der DE-OS 2 746 188 beschrieben werden, durch Ausbrennen von Polymeren befreit werden können. Die Nachteile dieser Methode sind u.a. das trotz größter Sorgfalt vor allem Präzisionsteile wie o.g. BKM-Mischer auch bei niedrigen Flammtemperaturen auf Dauer infolge Verformung oder Oxidation oder Ausglühen unbrauchbar werden. Zum anderen sind für die ökologisch und physiologisch unbedenkliche Verbrennung von organischen Substanzen Temperaturen erforderlich, die zum Verformen, Ausglühen, Verglühen, Sintern oder gar Schmelzen dieser wertvollen Metalle oder Metallteile führen können.

Schmelzverfahren mit direkter Wärmeeinwirkung auf die zu reinigenden Teile mit z.B. Heißluftgebläsen oder in Wärmeschränken sind nur bedingt verwendbar, weil sie nicht bis zur völligen Reinigung der Teile führen, da stets ein Restbelag hinterbleibt. Bei Verwendung von Heißluftgebläsen oder ähnlichen Geräten ist es außerdem schwierig, die Wärmeübertragung ganzflächig und nicht nur örtlich begrenzt einwirken zu lassen und aus diesem Grund kann es wieder zu den oben genannten Nachteilen kommen.

Mechanische Reinigungsverfahren wie Schaben, Schneiden oder Sandstrahlen führen vor allem bei empfindlichen Geräten oder solchen mit komplizierter Bauweise wie beispielsweise BKM-Mischer oder Rohrleitungen mit geringem Durchmesser nicht zum Erfolg und können die Geräte beschädigen.

Ein anderes Verfahren besteht darin, Metallteile durch Behandlung mit Chromschwefelsäure von organischen Substanzen zu befreien. Auch bei dieser Methode werden die zu reinigenden Apparaturen auf Dauer durch Anlösen -auch von Säure resistenten Edelstählen, wie V2A oder VXA, -unbrauchbar gemacht. Schwierig ist auch die Entsorgung verbrauchter Chromschwefelsäure.

Die Auflösung polymerer Substanzen in organischen Lösungsmitteln ist eine weitere Methode, die in vielen Fällen zum Erfolg führt. Für das Lösen der Polymeren, die z.B. zur Beschichtung von Textilien oder Leder Verwendung finden, kommen z.B. DMF, Perchlorethylen, Methylglykolacetat, Cyclohexanon, Toluol u.a. in Betracht.

Nachteilig bei diesen Lösungsmittelverfahren ist jedoch, daß sich die Entsorgung gebrauchter Lösungsmittel immer aufwendiger gestaltet. DMF ist normalerweise ein gutes Lösungsmittel für Polyurethane, kann jedoch nicht in allen Fällen mit Erfolg eingesetzt werden. So können z.B. Polyurethane auf Basis eines Polyesters aus Hexandiol und Adipinsäure, Isohorondiisocyanat und den Aminen

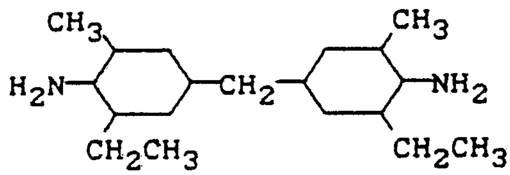

oder

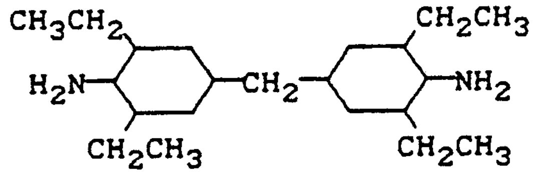

auch durch stundenlanges Kochen mit DMF unter Rückfluß nicht in Lösung gebracht werden.

Es ist weiterhin bekannt, daß Glykole eingesetzt werden, um Polyurethane durch Glykolyse zu spalten; die gewonnenen Polymerbruchstücke können erneut als Ausgangspolyole zur Herstellung von Polyurethanen eingesetzt werden (s. z.B. DE-OS 2 442 387 und DE-OS 3 232 461).

Das erfindungsgemäße Verfahren zur Behandlung von Thermoplasten, die <280 °C schmelzen, Duroplasten oder anderen, amid- und oder urethangruppenhaltigen Polymeren, ist dadurch gekennzeichnet, daß man die genannten Polymere mit Glycerin bei Temperaturen ≧ 120 °C, vorzugsweise 120-280 °C, besonders bevorzugt 150-250 °C, behandelt.

Dieses Verfahren dient vorzugsweise zur Abtrennung von Thermoplasten, die < 280 °C schmelzen, Duroplasten oder von anderen, amid- und oder urethangruppenhaltigen Polymeren von anderen Materialien, z.B. zum Zwecke der Reinigung, Aufarbeitung oder Abfallbeseitigung. Daneben kann es auch zur Behandlung von reinen Thermoplasten ode Nicht-Thermoplasten der genannten Art oder entsprechenden Mischungen, z.B. zum Zwecke der Aufarbeitung oder Abfallbeseitigung, Verwendung finden.

Insbesondere dient das neue Verfahren zur Abtrennung von Thermoplasten, die < 280 °C schmelzen, Duroplasten oder von anderen, amid- und/oder urethangruppenhaltigen Polymeren von Metalloberflächen-, z.B. bei der Reinigung von Kunsttoffverarbeitungsmaschinen und -apparaten sowie von Transport- und Lagergefäßen für Kunststoffe, insbesondere PUR-Kunststoffen.

Thermoplaste, die nach dem erfindungsgemäßen Verfahren behandelt werden können sind z.B. Polyolefine, z.B. Niederdruck- und Hochdruck-Polyethylen, Polypropylen, Polyamide, z.B. Polyamid 6, Polyamid 66, Polyester und Polyurethane. Als Beispiele für amid- und/oder urethangruppenhaltige Polymere seien genannt: Vernetze Polyurethane, Leder, Kasein, Wolle.

Als Beispiele für Duroplaste seien genannt: Epoxidharze, Phenoplaste, (Form)Aldehydkondensate.

Glycerin hat eine Dichte von 1,26, die höher liegt als die vieler Polymerer. Es ist daher möglich, Polymere durch Erhitzen über deren Schmelzpunkt zu verflüssigen und bei Unlöslichkeit in Glycerin entweder zum Aufschwimmen, zur Emulsionsbildung bei gleicher oder ähnlicher Dichte oder zum Absinken zu bringen. Bei stufenweisem Aufheizen von Gemengen ist somit die Möglichkeit einer Frakionierung der dieser Behandlung unterworfenen Materialien gegeben.

Zu den Polymeren, die nach Verflüssigung aufschwimmen, gehören u.a. HD-PE und LD-PE, fast alle PUR und unlösliche Bestandteile von PA 6, PA 66, Polypropylen und Polyester. Bei PA ist wegen seiner Labilität gegenüber dem Einfluß hoher Temperaturen naturgemäß eine Teillöslichkeit von Oligomeren bzw. auch vorhandenen oder entstehenden Einzelbruchstücken zu rechnen. PES sinkt nach dem Verflüssigen ab. Cellulose, die in Form von Natur-oder Regeneratfasern oder als Papier eingesetzt wird, ist unlöslich und kann in Faserform oder als Faser- bzw. Fadenverbund abgetrennt werden. Vulkanisierter Kautschuk ist unlöslich und kann als Festsubstanz von der Badober fläche abgenommen werden (Reifen von PKW). Bei dem Verflüssigen trennen sich weitgehend die aufschwimmenden und sich emulgierenden Polymeren von ihren mineralischen Zuschlägen oder Begleitstoffen, z.B. von $TiO_2$, das zur Stabilisierung und Opalisierung von PES oder PA-Fasern eingesetzt wird oder von mineralischen Farb- oder Füllpigmenten (z.B. $Fe_2O_3$ oder $SiO_2$), die zur Farbgebung von Beschichtungen, als Spinnfarbstoffe und dergleichen Verwendung finden, die infolge ihrer höheren Dichte in Glycerin sedimentieren.

Die Fraktionierung kann insbesondere dann von Vorteil sein, wenn Gemenge unbekannter Zusammesetzung dem erfindungsgemäßen Verfahren unterzogen werden.

Auch der thermische Abbau oder gegebenenfalls die Glykolyse nicht näher identifizierter Bestandteile solcher Gemenge sind naturgemäß von Bedeutung und Bestandteil des erfindungsgemäßen Verfahrens und betreffen vor allem einen thermischen Abbau von Duroplasten.

Die Durchführung des Verfahrens gestaltet sich in der Weise, daß die zu behandelnden Substanzen,

Stoffe, Schichtstoffe beschichteten Metalloberfläche u.s.w. in Glycerin, auf Temperaturen erhitzt werden, bei denen sie flüssig werden, d.h. vorzugsweise auf Temperaturen im Bereich von 120 °C bis 280 °C. Eine vorzugsweise Ausgestaltung des erfindungsgemäßen Verfahrens besteht darin, daß man das Polymer durch Erhitzen mit Glycerin auf ≧ 120 °C in eine auf physikalischem Wege von dem Begleitmaterial abtrennbare Form überführt.

Die Verflüssigung kann auch erfolgen, wenn zuvor im Verlauf der Reaktion ein gegebenenfalls partieller Abbau der Polymeren erfolgt ist. Das Verflüssigen von PE kann bereits bei Temperaturen unter 150 °C erfolgen.

Zur Trennung eines Polyamid 66/Polyester-Gemischs arbeitet man zur Abtrennung des Polyamids vorzugsweise zunächst bei 190-200 °C, und trennt anschließend den Polyester bei ca. 250 °C ab.

Für die Trennung von Polyamid/Baumwolle arbeitet man vorzugsweise bei 190-200 °C und für die Trennung von Polyester Baumwolle vorzugsweise bei etwa 250 °C.

Alle PU-Filme, Folien oder Beschichtungen, die nach einem PUR-Polyadditionsverfahren, wie es z.B. in der DE-OS 2 637 115 oder der DE-OS 3 522 978 beschrieben wird, hergestellt worden sind, lassen sich bei 220-250 °C verflüssigen.

Als Beispiel für die Auflösung von Eiweißkörpern dient die Auflösung von chromgegerbten Ledern bei Temperaturen von 230-240 °C, die quantitativ erfolgt, d.h. nicht nur die organische Substanz, sondern auch das zur Gerbung verwendete Chrom ist unter den Bedingungen des erfindungsgemäßen Verfahren überraschend in Lösung gegangen. Es kann nach bekannten Methoden quantitativ bestimmt und abgetrennt werden. Auch vegetabil gegerbte Leder gehen unter den genannten Bedingungen in Lösung.

Verflüssigte Substanzen, die in Glycerin nicht löslich sind, lassen sich auf mechanischem Wege nach bekannten Methoden, z.B. durch Abheben, Abrahmen, Dekantieren, trennen. Aus Lösungen können durch Fällung, Destillation oder mit Hilfe anderer bekannter Methoden die gelösten Substanzen abgetrennt werden. Analoges gilt auch für Emulsionen und für in Glycerin unlösliche Zuschlagstoffe wie anorganische Farbpigmente, Füllstoffe oder Komplexverbindungen.

Das erfindungsgemäße Verfahren öffnet nicht nur die Möglichkeit zur Aufarbeitung und gegebenenfalls Wiederverwendung von Stoffen, sondern bietet auch Möglichkeiten zur Trennung verschiedener Polymerer voneinander. Es wird auch die Möglichkeit eröffnet, Begleitstoffe wie Farbpigmente, z.B. $Fe_2O_3$, aus Thermoplasten abzutrennen. Dies geschieht dadurch, daß man den Thermoplasten der erfindungsgemäßen Behandlung unterwirft, wobei, sobald das Polymer verflüssigt ist, die in Glycerin unlöslichen und speizifisch schweren Farbpigmente sedimentieren und auf bekannte Weise, z.B. durch Dekantieren, abgetrennt werden können.

Ein wichtiger Aspekt des erfindungsgemäßen Verfahrens, sofern es zur Abfallbeseitigung eingesetzt wird, ist, daß die Thermoplaste oder nicht-thermoplastischen Polymere einen Teil des zur Behandlung verwendeten Glycerins, z.B. physikalisch einschließen können oder in diesem an- bzw. aufquellen. Da dieser Glycerinanteil als Nährboden für Bakterien und Pilze dienen kann, wird die biologische Abbaubarkeit der Rückstände erleichtert.

Abgetrennte und gegebenenfalls glycerin-haltige Stoffe können auch der Verbrennung zugeführt werden und damit u.a. für die Energieerzeugung nutzbar gemacht werden. Weiterhin ist hervorzuheben, daß das eingesetzte Glycerin nach Art eines Kreisprozesses, gegebenenfalls nach Rektifikation, immer wieder verwendet werden kann. Gerade die Wiederverwendbarkeit des Glycerins ist ein wesentlicher Aspekt des erfindungsgemäßen Verfahrens.

Völlig überraschend ist auch die Tatsache, daß sich nach dem erfindungsgemäßen Verfahren Eiweißkörper wie z.B. Kasein oder (Chrom)Leder in Lösung bringen lassen und z.B. Cr abgetrennt werden kann. Für die Abfallbeseitigung ist ebenfalls von Bedeutung, daß als Folge der Verflüssigung das behandelte Material anschließend ein wesentlich kleineres Volumen bei der Deponierung beansprucht, als sperrige Abfälle, z.B. Leder- oder Textilbeschichtungsreste, auch wenn sie der mechanischen Kompression unterzogen worden sind. Einbrennlacke und andere lösemittelbeständige Lacke, wie sie beispielsweise in der Autoindustrie zum Lackieren von Karrosserien oder in der Verpackungsindustrie auch zum Lackieren von Fässern verwendet werden, können durch die thermische Behandlung mit Glycerin soweit abgebaut werden, daß sie in z.B. MEK gelöst werden können. Dies kann beispielsweise dadurch geschehen, daß die behandelten Teile mit einem lösemittelfeuchten Tuch abgewischt werden und das blanke Metall freigelegt wird.

Das Verfahren soll durch die nachfolgenden Beispiele erläutert werden, ohne damit eine Einschränkung auf die hier beschriebenen Anwendungsmöglichkeiten erfolgt.

Beispiel 1

27 g einer PU-Folie, die durch Umsetzung eines NCO-Gruppen enthaltenden Vorpolymeren aus einem Adipinsäure-Hexandiol-Polyester und 1-Isocyanato-3-isocyanatomethyl-3,5,5-trimethylcyclohexan (IPDI) mit 3,3,5-Trimethyl-5-aminomethylcyclohexylamin (IPDA) gemäß der DE-OS 2 637 115 hergestellt worden ist, werden in einem Becherglas in 100 g Glycerin von 20 °C auf 240-250 °C 30 min erhitzt. Die Folie ist zerstört. Auf dem erkalteten Glycerin schwimmen 32 g einer ölig-flüssigen Masse auf, die abgerahmt werden kann. Das Glycerin ist weiterverwendbar.

Beispiel 2

31,3 g einer PU-Folie, die durch Umsetzung eines NCO-Gruppen enthaltenden Vorpolymeren aus einem Adipinsäure-Hexandiol-Polyester und IPDI mit dem Härter der Formel

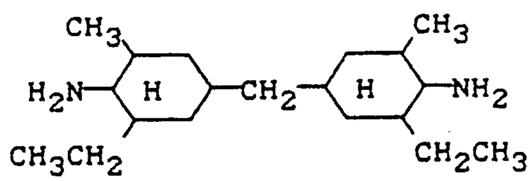

gemäß der DE-OS 3 522 978 hergestellt worden ist, werden in einem Becherglas in 100 g Glycerin 30 min auf 240-250 °C erhitzt. Nach dem Erkalten können 40,5 g einer gummiartigen Masse vom Glycerin abgehoben werden. Das Glycerin ist weiterverwendbar.

Beispiel 3

Ein BKM-Statikmischer wie er in einer Zweikomponenten-Polyurethan-Spritzpistole für reaktive Zweikomponenten-PU-Beschichtungen gemäß der DE-OS 3 522 978 verwendet wird, und der mit dem Polyurethan gemäß Beispiel 2 zguesetzt ist, wird mit Glycerin gemäß Beispiel 2 behandelt. Der Mischer wird rückstandlos gesäubert; das Polyadditionsprodukt schwimmt auf. Der Mischer kann anschließend noch mit Wasser nachgespült werden.

Beispiel 4

52,5 g einer PU-Folie gemäß Beispiel 1, die jedoch zusätzlich mit 10 Gew.-%, bezogen auf die pigmentierte Folien Eisenoxid pigmentiert worden ist, werden wie in Beispiel 1 angegeben behandelt. 80 g einer klebrigen Masse schwimmen auf. Ein großer Teil des Pigments kann als Bodensatz abgetrennt werden.

Beispiel 5

50 g der pigmentierten PU-Folie gemäß Beispiel 4, die auf Natronpapier vom Flächengewicht 30 g/$m^2$ aufgetragen ist, werden wie in Beispiel 1 angegeben behandelt. Es schwimmt eine klebrige Masse auf. Das Papier ist zerfallen; anteilig ist es in der aufgeschwommenen Masse enthalten, ein Teil ist in Glycerin dispergiert. Die klebrige Masse wiegt 63 g. Im Bodensatz ist anteilig Pigment enthalten.

Beispiel 6

Man verfährt gemäß Beispiel 5, wobei jedoch die PU-Folie auf Chromspaltleder aufgetragen ist. Es schwimmt eine klebrige Masse auf; die Lösung verfärbt sich nach braungrün.

Beispiel 7

Unter den Bedingungen von Beispiel 1 werden 26 g Weich-PU-Schaum behandelt. Es schwimmt eine klebrige Masse auf.

Beispiel 8

Unter den Bedingungen von Beispiel 1 wird ein Stück Hartschaum, der auf Diphenylmethan-4,4'-diisocyanat-Basis aufgebaut ist, behandelt. Es schwimmt eine klebrige Masse auf.

Beispiel 9

Unter den Bedingungen von Beispiel 1 werden 30 g eines Klebstoffrohstoffs, bei dem es sich um ein Vorpolymer aus einem Adipinsäure-Hexandiol-Polyester und Toluylendiisocyanat mit 0,5 % freien Hydroxylgruppen handelt, behandelt. Es schwimmen 37 g einer Masse auf, die nach dem Erkalten wachsartig fest wird. Das Glycerin ist weiterverwendbar.

Beispiel 10

Unter den Bedingungen von Beispiel 1 werden 50 g eines sog. Einkomponenten-Polyurethans für Beschichtungen behandelt. Es schwimmt 59 g einer Masse auf, die nach dem Erkalten wachsartig fest wird.

Beispiel 11

30 g Chromlederfalzspäne wurden gemäß Beispiel 1 in 270 g Glycerin behandelt. Es resultiert eine graugrüne Lösung ohne Sediment.

Beispiel 12

Gummischnitzel von einem Autoreifen werden gemäß Beispiel 1 behandelt. Die Gummischnitzel quellen etwas an, bleiben aber unlöslich und schwimmen auf.

Beispiel 13

Ein Polyestergewebe wird gemäß Beispiel 1 behandelt. Das Fasergefüge wird dabei zerstört. Der Polyester sinkt zu Boden und kann nach dem Erkalten aus der Lösung gehoben werden.

Beispiel 14

Ein gefärbtes Polyester-Baumwolle-Gewebe wird gemäß Beispiel 1 behandelt. Danach befindet sich das Polyestermaterial am Boden. Ein Teil der verwendeten Farb stoffe hat sich gelöst; das Baumwoll-Restgewebe ist noch in seiner Struktur erhalen. Es läßt sich nach Entfernung aus der Lösung leicht mechanisch zerstören (zerreiben, zerbröseln).

Beispiel 15

Chromlederspäne wurden gemäß Beispiel 1 in separaten Ansätzen mit Stearylalkohol, Diethylenglykol und einem hydroxylterminierten Polyester vom MG' 2000 aus Adipinsäure, Hexandiol und Neopentylglykol behandelt. Während die Späne in den genannten Alkoholen unlöslich sind, lösen sie sich in Glycerin unter den Bedingungen von Beispiel 1 auf.

Beispiel 16

Ein weißlackiertes Kupferblech (aus einem Gasofen entnommen) wird gemäß Beispiel 1 behandelt. Dabei wird die Lackierung vom Blech getrennt; das Pigment sedimentiert; das Bindemittel schwimmt auf.

Beispiel 17

Ein rostbraunes Kannenblech wird gemäß Beispiel 1 behandelt. Die Lackierung verfärbt sich und kann anschließend mittels eines mit Methylethylketon angefeuchteten Tuches abgewischt werden. Das Blech ist sauber und kann ohne weitere Vorbehandlung erneut lackiert werden. Es ist somit wiederverwendbar und braucht nicht verschrottet zu werden. In analoger Weise können Kannen gereinigt werden, die aus diesem Kannenblech hergestellt worden sind.

Beispiel 18

Man verfährt wie in Beispiel 17, jedoch mit dem Unterschied, daß ein grünlackiertes Kannenblech eingesetzt wird, von dem ein Teil der Fläche unbehandelt bleibt. Die behandelte Fläche verfärbt sich geringfügig und anschließend kann die Farbe an den behandelten Flächen mit einem Methylethylketon feuchten Lappen abgewischt werden. Die unbehandelte Fläche bleibt gegen Methylethylketon völlig resistent.

Beispiel 19

Ein Polyamidgewebe wird gemäß Beispiel 1 behandelt. Es resultiert eine sehr grobteilige Polymerdispersion. Nach dem Abkühlen bricht die Polyamiddispersion und schwimmt stippenförmig auf. Sie kann abfiltriert werden und das Glycerin erneut verwendet werden.

Beispiel 20

Ein mit PU-Polymerisat verstopftes Leitungsrohr mit einer lichten Weite von 5 mm wird hängend gemäß Beispiel 1 behandelt. Das Rohr wird einwandfrei gesäubert, ohne beschädigt zu werden und kann sofort weiterverwendet werden. Das PU-Polymerisat war als Folge einer unbeabsichtigten Polymerisation eines Reaktionsgmischs gemäß Beispiel 1 in dem Leitungsrohr entstanden und hatte zu einer Betriebsstörung geführt.

Beispiel 21

Ein 10 1-Reaktionsgefäß aus Glas, dessen Boden und Wände mit dem Polymerisat gemäß Beispiel 2 verschmutzt sind, wird gemäß Beispiel 2 mit Glycerin behandelt. Das Polymerisat schwimmt auf und kann mühelos mechanisch entfernt werden. Das Glasgefäß bleibt unbeschädigt und kann weiterverwendet werden.

Beispiel 22

An Stelle der derzeit praxisüblichen Becher aus Polyethylen oder Pappe, die für das Auswiegen der Reaktionspartner für die Dosieranlagen, die zur Durchführung des Verfahrens gemäß der DE-OS 2 637 115 erforderlich sind, werden Metallbecher aus V2A-Stahl eingesetzt. Die Metallbecher können nach Reinigung gemäß Beispiel 1 unbegrenzt wiederverwendet werden und brauchen nicht wie die Becher aus Papper oder Polyethylen nach einmaligem oder kurzfristigem Gebrauch verworfen zu werden.

**Ansprüche**

1. Verfahren zur Behandlung von Thermoplasten, die < 280 °C schmelzen, Duroplasten oder von anderen, amid- und/oder urethangruppenhaltigen Polymeren, dadurch gekennzeichnet, daß man sie mit Glycerin auf ≧ 120 °C erhitzt.

2. Verfahren gemäß Anspruch 1 zur Abtrennung von Thermoplasten, die < 280 °C schmelzen, oder von nicht-thermoplastischen, amid- und/oder urethangruppenhaltigen Polymeren von anderen Materialien.

3. Verfahren gemäß Anspruch 1 zur Abtrennung von Thermoplasten, die < 280 °C schmelzen, oder von nicht-thermoplastischen, amid- und/oder urethangruppenhaltigen Polymeren von Metalloberflächen.

4. Verfahren gemäß Anspruch 1 zur Reinigung von Kunststoffverarbeitungsmaschinen und -apparaten sowie von Transport- und Lagergefäßen für Kunststoffe und/oder deren Ausgangsmaterialien.

5. Verfahren gemäß einem oder mehreren der Ansprüche 1-4 zur Behandlung von PUR-Kunststoffen.

6. Verfahren gemäß Anspruch 1 zur Behandlung von Polyolefinen, Polyamiden, Polyurethanen, Polyestern, Leder, Kasein oder Wolle, Epoxiden, Phenoplasten oder Aldehydkondensaten.

7. Verfahren gemäß einem oder mehreren der Ansprüche 1-6, dadurch gekennzeichnet, daß man auf 150-250 °C erhitzt.